# EUROPEAN PATENT APPLICATION

(11) **EP 2 280 127 A1**
(43) Date of publication of application: **02.02.2011**
(21) Application number: 10170665.3
(22) Date of filing: 23.09.2004
(51) Int. Cl.: E04B 1/76, B32B 7/02

(54) **A thermally conducting building element, a building, and a method of erecting the building**

(30) Priority: 24.09.2003 US 505057 P
(62) Divisional of application: 04762870.6
(71) Applicant: Infinity Systems AG, 8008 Zürich (CH)
(72) Inventor: Reipur, John, 2930, Klampenborg (DK)
(74) Representative: Inspicos A/S

(57) **Abstract**

A building element for use in a building, the outer surfaces being thermally conducting and connected to a thermally conducting skeletal structure so that heat may be transferred to or removed from the surfaces of the building element. Heat may be stored under the building for later use.

## Description

The present invention relates to a novel manner of preparing building blocks for houses and building the houses. Especially the thermal properties but also the electrical properties as well as the energy expenditure properties of the building are novel and highly desirable.

Building blocks and building structures have been the focus of attention throughout all times. The energy expenditure relating to houses receives still more focus, and the present invention has brought about a technology which vastly reduces the amount of energy required to heat/chill a house in most parts of the world.

Building blocks and buildings are e.g. described in: JP 2000-297487, JP 2003-41676, JP 9-60143, JP 2002-201729, JP 9-60145, JP 2000-179065, JP 10-205242, US-A-4,145,852, US-A-5,433,049, US-A-5,146,721, US-A-4,527,373, and US 2003/0079428.

In a first aspect, the invention relates to a building element comprising:
- at least three, at least substantially parallel, thermally conducting sheets, plates, or layers, a first and a second of the thermally conducting sheets/layers/plates being positioned on either side of a third of the thermally conducting sheets/layers/plates,
- a first thermally insulating layer, plate, or sheet, positioned between the first and the third thermally conducting sheets/layers/plates, and
- a second thermally insulating layer, plate, or sheet, positioned between the second and the third thermally conducting sheets/layers/plates.

The overall functionality of a thermally conducting sheet/plate/layer is to transport heat/temperature in order to have as close as reasonably possible the same temperature over the full surface thereof. Depending on the actual temperature and temperature drop desired over parts of the sheet/plate/layer, different thermal conductivity coefficients are required. This will be logical to the skilled person.

In the present context, a thermally conducting sheet/plate/layer needs not be selfsupporting, whereby the thickness thereof may be rather small, depending on the amount of heat which is desired moved and the strength required of the material taking into account the strength of the remainder of the building element.

Also, the material(s) constituting or forming part of the sheet/plate/layer may be selected on the basis of its/their thermal conduction, strength, shape stability, wear resistance, resistance to the presence of water/steam, and/or looks (as it may constitute the visible part of a wall). Suitable thermally conducting materials may be metals, such as aluminium, copper, silver, iron, and gold, alloys, such as bras, but also ceramic materials, such as silicon carbon, and periclase, and other materials, such as carbon.

It is clear that the higher the thermal conductivity, the higher the functionality of the present invention.

Therefore, in this context, no difference is made between "sheet", "plate", "layer" or other terms relating to the thickness of the material in that this will differ with different materials and different uses (warm or cold climate, indoor, outdoor, the amount of heat to transfer, how rigid/strong/stable the remainder of the building element is).

Naturally, the individual sheets of thermally conductive material may be made of different materials or compositions just as well as the sheets of thermally insulating material may be made of different materials and compositions.

Presently, any thermally insulating material may be used. Depending on the functionality and strength of the sheets etc. of thermally/electrically conducting material, this thermally insulating material may be desired to be stronger or may be allowed to be weaker, and the electrical conductivity/insulating properties of the material may be relevant or not. Standard insulating materials may be Rockwool®, bricks, clay, feathers, wood, plaster, gypsum, concrete, different types of rock, glass, foams, foamed materials, or other insulating materials usually used in buildings.

Also, in the present context, the term "heat" will be described even though, sometimes, heat is actuary desired removed, so that chilled gas etc is actually brought forward in order to chill e.g. a surface. The operation of the present invention is, however, the same.

Consequently, the invention will mostly be described for use In a hot climate where heat is desired removed and/or stored during the day in order to heat e.g. a building during the colder night.

Normally, the first, second, and third thermally conducting sheets as well as the first and second thermally insulating sheets will be co-extending and parallel in order to form a, normally rectangular, building block which may have any desired size or dimension.

A specific embodiment is one wherein, along a predetermined direction in a plane of the first sheet/layer/plate, the first and second sheets/layers/plates extend farther than the third conducing layer(s)/plate(s)/sheet(s).

This difference In how far the individual sheets extend may be used for ensuring e.g. no thermal connection between the third layer and e.g. a skeleton structure to which the first and second sheets is attached.

This direction may be a specific direction of the building element, when it is in use in a building, such as horizontal or vertical, or may be a specific direction relating to how and where the building element is attached to e.g. a skeleton structure. Alternatively, the first and second sheets actually may extend farther in that plane in all directions.

The building element may further comprise openings in the first and second sheets/plates/layers, such as for venting the interior of the building element or for providing venting across the building element.

It should be noted that, in fact, the present building element may be provided in multiple parts, such as two parts, which, when assembled, form the building element. As will become clear further below, the fact that the first and second thermally conducting sheets may extend farther in the plane than other sheets in the element may make it advantageous to provide the building element in two parts (divided along the plane and at a position between the first and second thermally conducting sheets) so as to assemble the building element while attaching it to e.g. a skeleton structure.

A second aspect of the invention relates to a building or a building envelope comprising:
- inner and/or an outer skeleton structure of at least substantially rigid, thermally conducting elements,
- a plurality of thermally conducting sheets/plates/layers, a first plurality of the thermally conducting sheets/plates/layers being thermally connected to one or more of the rigid elements of any inner skeleton structure, and/or a second plurality of the thermally conducting sheets/plates/layers being thermally connected to one or more of the rigid elements of any outer skeleton structure, and
- a thermally insulating material positioned between the first plurality of sheets/plates/layers and the second plurality of sheets/plates/layers.

In this and the following aspects, the invention will be described in relation to a building (envelope) having thermally conducting sheets/plates/layers both at internal sides thereof and at outer sides thereof. However, it may be desired to actually only provide these sheets etc. at one of the internal sides or the outer sides for internal temperature control or for receiving and storing heat/cold from the outside of the house, respectively. In that situation, additional heat/cold providing may be required or standard radiators/convectors may be required for actually providing the desired temperature in the building.

Thus, a building having a normal outer brick/wood wall may have an inner wall having the thermally conducting sheets and inner skeleton structure, whereby the standard heating of a house is replaced, but where the heat to be provided (hot water, gas burner, oil burner, etc) may still be required. Alternatively, a house having a standard inner side having e.g. standard plumbing and radiators/convectors may be provided with an outer part having the thermally conducting sheets and an outer skeleton structure providing e.g. heat/cold gas/water to the plumbing.

In the context of the second aspect, the skeleton structure will normally be a structure where the outer skeleton structure defines an outer contour of the building, the inner skeleton structure defining an inner contour fully enclosed by the outer contour. This would normally be the case for a skeleton structure defining the outer walls of a building. However, it should be noted that the skeleton structure and the building elements may just as well be used for inner walls (walls having a room at either side thereof) of the building.

Also, it should be noted that exactly how large a thermal conduction must be provided by the term "thermally connected" will depend on the materials used for the structure and the elements and will depend on the level of ambition. A high thermal conductivity between e.g. two metallic elements (a sheet and a rigid element) may be obtained by welding/soldering the elements to each other. Less ambitious thermal connection may be provided by riveting the elements together or using screws or the like where the thermal connection is not along a full length of the intersection between the elements but more at well-defined points. This last connection may then be improved by providing in the intersection, a thermally conducting paste, e.g., in order to increase the area of thermal connection.

Other materials, such as carbon and ceramic materials, could be glued together - or screws/rivets may be used depending on the desired amount of heat transferred. Again, thermally conducting pastes or the like may be used in order to increase the thermal connection.

Thus, this aspect of the invention relates to a building or building envelope having a skeleton structure actually comprising an inner skeleton structure to which a plurality of thermally conducting elements are thermally connected so that heat from a thermally conducting sheet may be transported to the structure - or vice versa. In one embodiment, not only the thermally conducting sheets of the inner and outer structures are insulated from each other but also the skeleton structures. In other embodiments, a controlled flow of heat may be provided there between.

It should be noted that the full surface (except for e.g. windows and doors which may, in fact, form part of building elements) may actually be thermally conducting sheets of the first or second plurality, but that this is in no way required. Also, these sheets may be covered both internally in the house and outside with covers in order to change the appearance or physical characteristics (such as water resistance etc.) thereof.

In a preferred embodiment, the rigid elements are positioned in pairs of one element from the inner structure and one element from the outer structure, the elements of each pair being at least substantially parallel, and wherein the sheets/plates/layers are provided as building elements each comprising a pair of one sheet/plate/layer of the first plurality and one sheet/plate/layer of the second plurality, and part of the thermally insulating material positioned there between. Thus, this forms building elements of the basic structure (without, however, any internal sheets at this point) of the first or second aspects. Naturally, the building elements of the first aspect will be suited for this aspect.

In a preferred embodiment, the building further comprises first means for removing heat from and/or providing heat to the first and/or second sheets/layers/plates via the rigid elements. This is highly interesting in that the heat, e.g. incident on a house may now be removed and, which will be clear further below, be used for other purposes. Also, this aspect may be used for controlling the temperature of surfaces within the house by simply controlling the temperature of the walls/celling/floor instead of providing radiators, etc.

In one embodiment, the rigid means may be solid and able to actually transport the heat simply by their own thermal conductivity.

However, in the preferred embodiment, at least one of the rigid elements comprises a channel extending in a longitudinal direction of the rigid element, and wherein the first removing/providing means comprise means for providing a flow of a liquid, gas, and/or fluid through the channel in order to provide heat to or remove heat from the rigid element. This may provide a faster and more controllable transport of heat.

Naturally, the rigid element(s) may have any number of channels, and pumps of any known type may be used for transporting the fluid/liquid/gas through the channel(s).

When each of a plurality of the rigid elements comprises a channel extending in a longitudinal direction of the rigid element, and when the first removing/providing means comprise means for providing an individually controllable flow through each of the plurality of rigid elements, it becomes quite feasible to control the temperature of individual rigid elements and thereby the sheets thermally connected thereto. Also, it may be seen that heat may now be transported from surface to surface, from inside a house to the outside or vice versa, from floor to ceiling or from room to room.

In fact, it is possible to actually define a desired temperature at each rigid element or surface within and outside the house. It may be desired to have a relatively cool bedroom with, however, a warm floor. It may be desired to have a certain outer wall of the house relatively warm or with a defined lowest temperature - in order to be able to grow certain plants at that wall.

In order to facilitate this, preferably, the first removing/providing means comprise means for controlling a flow from one rigid element to and/or from one or more other rigid elements, the controlling means being positioned at an intersection between the one rigid element and the one or more other rigid elements. In that situation, not only flow or not flow (and the direction of the' flow) may be controlled but also from where the flow comes and where it goes.

An interesting embodiment is one wherein means are also provided for actually controlling a pressure of the gas/liquid/fluid in one or more of the rigid elements. It is clear that the temperature and heat absorbing/emitting properties of materials may relate to the pressure thereof (a principle normally used in e.g. refrigerators), whereby this controlling of the pressure of the gas/liquid/fluid may help absorbing heat from a sheet or providing heat to a sheet, eg. These pressure controlling means may be fans, pumps, valves, or the like. Controlling the pressure of a liquid/gas/fluid is a standard technology achieved using any of a wide variety of elements.

Preferably, the first removing/providing means comprises means for determining a temperature of or at one or more of the rigid elements and for controlling a flow on the basis of the temperature(s) determined. These controlling means then may receive the temperature information and determine how to provide the correct temperature at the individual positions - that is, how to provide the flow in the rigid elements.

It is clear that the above aspect is able to transport heat (or chilled gas/liquid/fluid) from surface to surface in order to obtain the correct temperatures. This is, however, not always possible. Thus, it may not be able to provide more heat at a surface, if no excess heat is to be found in the house.

There are multiple ways of solving this problem. The simplest solution is to have the building further comprise means for removing heat from or providing heat to the flow. This may simply be a heater or cooler provided so that the gas/liquid/fluid may be heated or chilled in order to provide the correct temperature.

A more ecologically interesting (and cheaper) solution is one comprising a heat (or cold) storage where excess heat may be stored e.g. during the day when the sun heats the outer surface of the house and from which heat may be draws during cool nights. Alternatively, the storage may be chilled during cool nights in order to chill inner surfaces of the house during hot days.

A solution of this type may be provided by the building further comprising second means for providing heat to or removing heat from a first volume below the building. This volume may be a storage of any material, such as grabble, debris, water, dirt, rocks, etc, which are positioned below the building in a position where outdoor temperatures do not affect it to any substantial degree - and which is preferably also positioned so that terrestrial heat does not even out the temperature thereof. This position may be immediately below the house.

Preferably, then, the second means comprise means for providing a flow of a fluid/gas/liquid through the first volume in order to remove heat there from and/or provide heat thereto, the building further comprising means for controlling a flow between the flow providing means of the first and second removing/providing means. This flow between these means may be a flow of liquid/gas/fluid but also merely a flow of energy without mixing gas/fluid/liquid as is seen In e.g. heat exchangers.

In this solution, a temperature storage is simply provided in a cheap fashion, and the controlling of the temperature flow is easily changed to also take this storage into account.

In fact, other solutions may be found which may be used Instead of the above storage solution or which may be quite advantageous together with this solution:
- The building may further comprise third means for providing heat to or removing heat from a second volume, the second volume being external to the building (such as at or in the surroundings thereof), air temperatures external to the building being able to Influence the temperature of the second volume, This second volume may be immediately below a lawn of the house or provided as today's water heaters or solar power panels. Then, preferably, the third means comprise means for providing a flow of a fluid/gas/liquid through the second volume in order to remove heat there from and/or provide heat thereto, the building further comprising means for controlling a flow between the flow providing means of the first and third removing/providing means.
- The building may further comprise fourth means for providing heat to or removing heat from a third volume, the third volume being external to the building, and air temperatures external to the building not being able to Influence the temperature of the third volume to any substantial degree. This third volume may be the underground as used today for terrestrial heating. Then, again, preferably the fourth means comprise means for providing a flow of a fluid/gas/liquid through the third volume In order to remove heat there from and/or provide heat thereto, the building further comprising means for controlling a flow between the flow providing means of the first and fourth removing/providing means.

It is now clear that not only the building itself with all surfaces potentially taking part in this thermal controlling may be used but also a storage, which (just as the house) may receive hot or cold fluid/gas/liquid from the surfaces of the house, from its surroundings or the underground in order to control the temperatures of the surfaces of the house.

This means that the actual expenditure of electricity, oil, wood, coal, or gas to heat/chill the house may be vastly reduced due to the possibility of deriving or removing heat using the house surfaces, the underground, the storage, and the surroundings and the fact that the storage makes it possible to store e.g. excess heat during the day and have it removed during cold nights.

Similarly to the first aspect, a third aspect relates to a method of providing a building element, the method comprising:
- providing at least three, at least substantially parallel, thermally conducting sheets, plates, or layers, and positioning a first and a second of the thermally conducting sheets/layers/plates on either side of a third of the thermally conducting sheets/layers/plates,
- providing a first thermally insulating layer, plate, or sheet between the first and the third thermally conducting sheets/layers/plates, and
- providing a second thermally insulating layer, plate, or sheet between the second and the third thermally conducting sheets/layers/plates.

All comments to materials, structure, etc. mentioned in relation to the first aspect are equally relevant to this sixth aspect.

In this aspect, preferably, the step of providing the at least three sheets/plates/layers comprises providing sheets/plates/layers so that, along a predetermined direction In a plane of the first sheet/layer/plate, the first and second sheets/layers/plates extend farther than the third conducting layer(s)/plate(s)/sheet(s).

Again, in the third aspect, the method may further comprise the step of providing openings in the first and second sheets/plates/layers.

Similarly to the second aspect, a fourth aspect of the invention relates to a method of providing a building, the method comprising:
- providing an inner and an outer skeleton structure of at least substantially rigid, thermally conducing elements,
- providing a plurality of thermally conducting sheets/plates/layers, and thermally connecting a first plurality of the thermally conducting sheets/plates/layers to one or more of the rigid elements of the inner skeleton structure, and thermally connecting a second plurality of the thermally conducting sheets/plates/layers to one or more of the rigid elements of the outer skeleton structure, and
- providing a thermally insulating material positioned between the first plurality of sheets/plates/layers and the second plurality of sheets/plates/layers.

Again, all comments made to the second aspect are equally relevant to the fourth aspect.

Preferably, the step of providing the skeleton structures comprises positioning the rigid elements in pairs of one element from the inner structure and one element from the outer structure, the positioning step comprises positioning the elements of each pair at least substantial parallel, the step of providing the sheets/plates/layers comprises providing the sheets/plates/layers as building elements each comprising a pair of one sheet/plate/layer of the first plurality and one sheet/plate/layer of the second plurality, and part of the thermally Insulating material positioned there between. In that situation, the building elements of the first, second or sixth/seventh aspects may be used - even without the internal sheets of conducting material.

A preferred embodiment comprises a first step of removing heat from and/or providing heat to the first and/or second sheets/layers/plates via the rigid elements. In this situation, preferably the step of providing the skeleton structures comprises providing the skeleton structures having at least one rigid element comprising a channel extending in a longitudinal direction of the rigid element, and wherein the step of removing/providing heat comprises the step of providing a flow of a liquid, gas, and/or fluid through the channel in order to provide heat to or remove heat from the rigid element.

Preferably, the step of providing the skeleton structures comprises providing the skeleton structures in which each of the rigid elements comprises a channel (or a plurality of channels) extending in a longitudinal direction of the rigid element, and wherein the first removing/providing step comprises the step of individually controlling a flow through each of the plurality of rigid elements.

As mentioned above, the pressure in the individual rigid elements may also be controlled, whereby the method may comprise a step of controlling the pressure of the gas/liquid/fluid in one or more of the rigid elements.

In one embodiment, the first removing/providing step comprises controlling, at an intersection between the one rigid element and the one or more other rigid elements, a flow from the one rigid element to and/or from the one or more other rigid elements.

Preferably, the first removing/providing step comprises determining a temperature of or at one or more of the rigid elements and controlling a flow on the basis of the temperature(s) determined.

An interesting embodiment is one which further comprises a second step of providing heat to or removing heat from a first volume below the building. This volume may be defined immediately below the building in order for ambient air temperatures, the sun, the wind etc. to not influencing the temperature to any significant degree.

Then, the second step preferably comprises providing a flow of a fluid/gas/liquid through the first volume in order to remove heat there from and/or provide heat thereto, and a step of controlling a flow between the flow providing means of the first and second removing/providing means.

Additionally or optionally, the method may further comprise a third step of providing heat to or removing heat from a second volume, the second volume being external to the building, air temperatures external to the building being able to influence the temperature of the second volume. This volume may e.g. be a lawn or panels normally used for solar power or water heaters.

Then, the third step preferably comprises providing a flow of a fluid/gas/liquid through the second volume in order to remove heat there from and/or provide heat thereto, and a step of controlling a flow between the flow providing means of the first and third removing/providing means.

Additionally or optionally, the method may further comprise a fourth step of providing heat to or removing heat from a third volume, the third volume being external to the building, and air temperatures external to the building not being able to influence the temperature of the third volume to any substantial degree. This may be obtained in the same manner as normally used for deriving terrestrial heat.

Then, the fourth step preferably comprises providing a flow of a fluid/gas/liquid through the third volume in order to remove heat there from and/or provide heat thereto, and a step of controlling a flow between the flow providing means of the first and fourth removing/providing means.

The advantages and combination of these storages and flows is described in relation to the third aspect of the invention.

Alternatively or in addition, the method may further comprise a step of removing heat from or providing heat to the flow.

In the following, a preferred embodiment of the invention will be described with reference to the drawing, wherein:
Fig. 1 illustrates a basic building element for a wall, ceiling, roof, or a floor,
Fig. 2 illustrates the basic building element of Fig. 1 positioned between the structural elements forming the skeleton of a house,
Fig. 3 illustrates a house erected with the basic elements and the structural elements,
Fig. 4 illustrates a line-out of a house and the ground under and beside the house,
Fig. 5 illustrates a valve positioned where three structural elements intercept,
Fig. 6 illustrates a manner of fixing a thermally insulating material to a sheet.

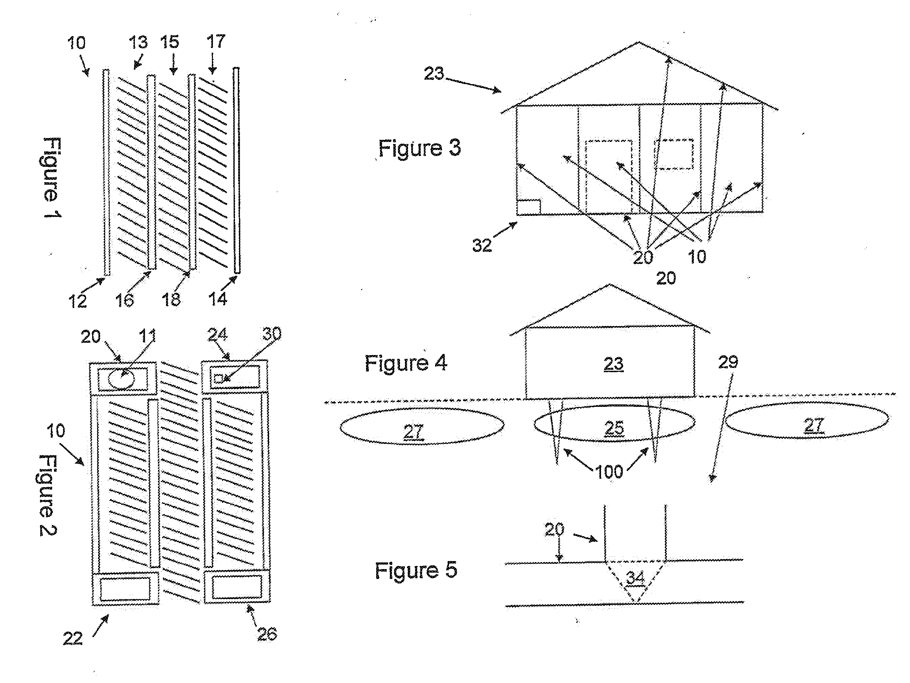

In Fig. 1, the basic building element 10 comprises two outer metallic (or other materials with high thermal conductivity) surfaces or plates 12 and 14, two inner metallic (or other materials with high thermal and/or electric conductivity) surfaces or plates 16 and 18, and three layers, 13, 15, and 17, of a thermally insulating material, such as Rockwool®.

This element 10 has been manufactured by simply sandwiching the elements and attaching these to each other by e.g. gluing, heating, welding, soldering, sintering, the use of force, the use of elements which are sticky in themselves, the forcing of material into openings/pockets of another element, or the like.

The thermal function of this element is that when a temperature difference exists over the element (between plates 12 and 14), the plates 12 and 14 will ensure that the same temperatures are present over the full surfaces of the plates 12 and 14. The plates 16 and 18 will ensure that the temperature differences inside the element 10 (between plates 12 and 16, 16 and 18, and 18 and 14) will be the same all over the surfaces thereof.

Further below, a further use of the plates 16 and 18 will be described.

Fig. 2 illustrates what the basic element 10 may be used for in a building,

In fig. 2, the basic element 10 has been positioned between two pairs of hollow structural elements, 20, 22, 24, and 26. These structural elements are made of a thermally conducting material, such as a metal (such as Aluminium), whereby the elements 20 and 22 will be heated/chilled by the temperature of the plate 12, and the elements 24 and 26 will be heated/chilled by the temperature of the plate 14.

It is understood that the building element 10 may, in fact, be provided as two parts which are provided from each side of the structural elements (see Fig. 2) and which, when the two parts are assembled, form the building element. In this manner, the structure of the house may be erected and the building elements still extend further (e.g. in the horizontal direction) than the actual distance between the elements 20 and 22 for ensuring an overlap prior to and while attaching e.g. the plate 12 to the elements 20 and 22.

Inside these structural elements (commonly denoted 20), air or liquid may be transported in order to receive and transport the high/low temperature - or to provide a lower or higher temperature to the structural element 20 and further to the related plate(s).

Alternatively, the structural elements 20 may themselves (such as if they were solid) transport the energy.

Thus, it is clear that the outer plates of e.g. a house may heat the structural elements during the day, which high temperature may be "stored" and delivered on the inner plates during the night. Conversely, a low temperature may be "stored" during the night and delivered to the inner plates during the day.

Fig. 3 illustrates a house 23 built by the basic elements 10 and the structural elements 20. It is seen that some basic elements 10 may be provided with doors or windows. Providing a door or a window is quite easy due to the fact that e.g. no water runs in the elements, and that they may simply be cut by known means (such as a saw).

Naturally, all internal walls as well as the floors and cellings may be made of the same elements 10 and attached to similar structural elements 20 positioned inside the house.

The structural elements 20 are preferably interconnected so that the inner elements (e.g. 20 and 22) are interconnected and the outer elements (e.g. 24 and 26) are interconnected. However, as will become clear below, intelligent controlling of the flow of the high/low temperature in the structural elements 20 may require a more intelligent interconnection of the structural elements 20 but will provide a number of advantages.

In general, different temperatures will exist on the different outer surfaces of a house depending on the position of the sun, the direction of any wind, etc. Thus, different temperatures will be available for transport to other surfaces or for "storage".

Also, different temperatures will exist in the individual rooms in the house and different temperatures may be desired. In fact, different surfaces in the house may be desired to have different temperatures (many people like it relatively cool in the bedroom but still like the floor warm).

These different circumstances may be taken into account when the individual surfaces may be addressed separately in the manner that the temperature of each surface may be utilized or controlled separately. Or, rather, the temperature of each individual inner and/or outer structural element 20 may be addressed separately.

Thus, a thermo sensor 30 is present in each structural element 20 in order to transmit (e.g. wirelessly or as described further below) to a central unit 32 the temperature thereof or of the liquid/fluid/gas therein.

This gas, liquid and/or fluid may, in principle, be any suitable gas/fluid/liquid, such as air, water, Freon, powders, or the like. It may be desired to avoid toxic materials due to the risk of leaks. On the other hand, the thermal properties of the gas/liquid/fluld may be the highest priority in order to maximize the effect of the present invention. Thus, materials used in air conditioners, freezers, coolers, or other thermally active equipment may be desired.

Furthermore, controllable valves 34 are preferably positioned at all relevant intersections of two or more structural elements 20 in order for the unit 32 to be able to control the flow of hot/cold gas/fluid/liquid in the structural elements 20.

Also, fans 11 may be provided in the elements 20 or at other positions of the flow of gas/liquid/fluid in order to facilitate the desired flow thereof.

Therefore, the central unit 32 may now direct hot liquid/gas/fluid from a hot element 20 or a hot plate 12 (or 14) via the valves 34, fans 11, and elements 20 to an element 20 and a plate 14 (or 12) which is desired hotter than it is - or vice versa.

Also, as is known from e.g. refrigerators, the temperature and therefore heat providing or absorbing properties of a gas/liquid/fluid depends on the pressure thereof. Thus, the pressure may be controlled in individual ones or all of the elements 20, such as by the fans 11 and/or the valves 34, in order to further facilitate and optimize the thermal properties of the invention.

This has far-reaching consequences in that the energy expenditure of a house may be vastly reduced. Solar power may be derived from a fully illuminated surface of the house and directed elsewhere. Excess heat may be dissipated from the full outer surface of the house e.g. at night.

In fact, referring now to Fig. 4, not only the actual surface of the house 23 may be used for this thermal manipulation.

The ground or area 25 just below a house 23 is influenced very little by the temperature in the house 23 and the temperature of the air/ground 27 outside the house 23. Also, the temperature of the deeper lying ground 29 has little influence on the volume 25. Thus, it may be used as a heat/cold reservoir by allowing the fluid/gas/liquid flowing in the elements 20 to flow into a volume 25 defined below the house. This volume 25 may be dirt/rubble/metal/water or the like and a number of fluid/gas/liquid conductors (not illustrated) may be provided to adjust the temperature thereof.

The area/volume 25 may be used for storing heat or low temperatures for use at a later stage. In cold areas, the heat obtained from the outer walls (from the sun and the hot air) may be transported to the volume 25 in order to heat that volume and to, during a cold night, draw heat from the volume. In hot areas, the volume 25 may be chilled due to the low night temperatures, and the low temperature be used for chilling internal surfaces during the day.

The area/volume 25 may be chilled/heated using thermally conducting spikes or elements 100 which are provided under the house and into the area/volume 25. These spikes may also be used for actually supporting the house. In addition, the house may, in fact, be fixed to the spikes using internal screws or other fastening means, which are engageable only from inside the house.

Thus, the temperature of the ground 27 outside the house, that of the under-house reservoir 23 and heat of the earth (terrestrial heat) obtained from deeper-lying ground 29 may be used in addition to the heat/cold obtained at the outer surface (or inner surface) of the house 23 in the providing of the correct temperature inside the house (or even outside if that was desired - such as for growing certain plants at a given outside wall of the house).

The central unit 32 is now able to learn (be instructed to) what temperature is desired in each room or at each wall/ceiling/floor surface, to know what the real temperatures are both at the wall/ceiling/floor surfaces, the rooms, the storage 25, the underground 29, and the surrounding ground 27, and to, via the valves 34 and fans 11, move hot/cold gas/fluid/liquid around in the elements 20, and maybe through the volumes 25, 27, and 29, in order to obtain the desired temperatures. Naturally, it may be desired to have means for heating or chilling the gas/liquid/fluid, if the correct temperatures cannot be obtained otherwise.

If, e.g. it is desired to cover the building or parts thereof with a thick cover of e.g. rocks or bricks, it may be desired to leave a space between the present building elements 10 and the cover in order to facilitate convection there between and thus a better operation of the element 10.

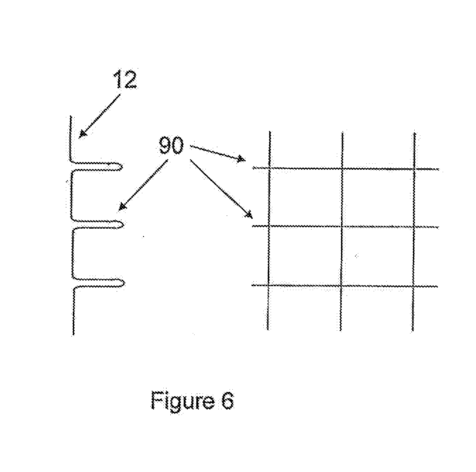

Finally, Figure 6 illustrates a manner of preparing an element 10 where the sheet 12 is prepared with a number of parallel protrusions 90 made of the sheet by bending or forcing the sheet. In that situation, the thermally insulating layer may be provided so as to extend between the protrusions 90 and thereby by friction be attached to the sheet 12.

In order to increase the strength of the element 10, different sheets of this type may be provided with the protrusions 90 directed at an angle to each other. This is also illustrated.

Finally, it should be noted that the protrusions 90 may be sufficiently soft to actually bend, if a screw 70 is introduced or a hole drilled, so that holes or attachments are not attempted on the sides of the protrusions 90, but so that these simply bend and the holes ere made at the straight (vertical on the figure) portions of the sheet 12.

The invention further relates to the following embodiments:
1. A building element comprising:
   - at least three, at least substantially parallel, thermally conducting sheets, plates, or layers, a first and a second of the thermally conducting sheets/layers/plates being positioned on either side of a third of the thermally conducting sheets/layers/plates,
   - a first thermally insulating layer, plate, or sheet, positioned between the first and the third thermally conducting sheets/layers/plates, and
   - a second thermally insulating layer, plate, or sheet, positioned between the second and the third thermally conducting sheets/layers/plates.
2. A building element according to embodiment 1, wherein, along a predetermined direction in a plane of the first sheet/layer/plate, the first and second sheets/layers/plates extend farther than the third conducting layer(s)/plate(s)/sheet(s).
3. A building element according to any of the preceding embodiments, further comprising openings in the first and second sheets/plates/layers.
4. A building comprising:
   - an inner and an outer skeleton structure of at least substantially rigid, thermally conducting elements,
   - a plurality of thermally conducting sheets/plates/layers, a first plurality of the thermally conducting sheets/plates/layers being thermally connected to one or more of any rigid elements of the inner skeleton structure, and a second plurality of the thermally conducting sheets/plates/layers being thermally connected to one or more of any rigid elements of the outer skeleton structure,
   - a thermally insulating material positioned between the first plurality of sheets/plates/layers and the second plurality of sheets/plates/layers
5. A building according to embodiment 4, wherein the rigid elements are positioned in pairs of one element from the inner structure and one element from the outer structure, the elements of each pair being at least substantial parallel, and wherein the sheets/plates/layers are provided as building elements each comprising a pair of one sheet/plate/layer of the first plurality and one sheet/plate/layer of the second plurality, and part of the thermally insulating material positioned there between.
6. A building according to any of embodiments 4 or 5, the building further comprising first means for removing heat from and/or providing heat to the first and/or second sheets/layers/plates via the rigid elements.
7. A building according to embodiment 6, wherein at least one of the rigid elements comprises a channel extending in a longitudinal direction of the rigid element, and wherein the first removing/providing means comprise means for providing a flow of a liquid, gas, and/or fluid through the channel in order to provide heat to or remove heat from the rigid element.
8. A building according to embodiment 7, wherein each of a plurality of the rigid elements comprises a channel extending in a longitudinal direction of the rigid element, and wherein the first removing/providing means comprise means for providing an individually controllable flow through each of the plurality of rigid elements.
9. A building according to any of embodiments 7 or 8, wherein the first removing/providing means comprise means for controlling a flow from one rigid element to and/or from one or more other rigid elements, the controlling means being positioned at an intersection between the one rigid element and the one or more other rigid elements.
10. A building element according to any of embodiments 6-9, wherein the first removing/providing means comprises means for determining a temperature of or at one or more of the rigid elements and for controlling a flow on the basis of the temperature(s) determined.
11. A building according to any of embodiments 6-10, further comprising second means for providing heat to or removing heat from a first volume below the building.
12. A building according to embodiment 11, wherein the second means comprise means for providing a flow of a fluid/gas/liquid through the first volume in order to remove heat there from and/or provide heat thereto, the building further comprising means for controlling a flow between the flow providing means of the first and second removing/providing means.
13. A building according to any of embodiments 6-12, further comprising third means for providing heat to or removing heat from a second volume, the second volume being external to the building, air temperatures external to the building being able to influence the temperature of the second volume.
14. A building according to embodiment 13, wherein the third means comprise means for providing a flow of a fluid/gas/liquid through the second volume in order to remove heat there from and/or provide heat thereto, the building further comprising means for controlling a flow between the flow providing means of the first and third removing/providing means.
15. A building according to any of embodiments 6-14, further comprising fourth means for providing heat to or removing heat from a third volume, the third volume being external to the building, and air temperatures external to the building not being able to influence the temperature of the third volume to any substantial degree.
16. A building according to embodiment 15, wherein the fourth means comprise means for providing a flow of a fluid/gas/liquid through the third volume in order to remove heat there from and/or provide heat thereto, the building further comprising means for controlling a flow between the flow providing means of the first and fourth removing/providing means.
17. A building according to any of embodiments 6-16, further comprising means for removing heat from or providing heat to the flow.
18. A method of providing a building element, the method comprising;
   - providing at least three, at least substantially parallel, thermally conducting sheets, plates, or layers, and positioning a first and a second of the thermally conducting sheets/layers/plates on either side of a third of the thermally conducting sheets/layers/plates,
   - providing a first thermally insulating layer, plate, or sheet between the first and the third thermally conducting sheets/layers/plates, and
   - providing a second thermally insulating layer, plate, or sheet between the second and the third thermally conducting sheets/layers/plates.
19. A method according to embodiment 18, wherein the step of providing the at least three sheets/plates/layers comprises providing sheets/plates/layers so that, along a predetermined direction in a plane of the first sheet/layer/plate, the first and second sheets/layers/plates extend farther than the third conducting layer(s)/plate(s)/sheet(s).
20. A method according to any of embodiments 18 or 19, further comprising the step of providing openings in the first and second sheets/plates/layers.
21. A method of providing a building, the method comprising:
   - providing an inner and an outer skeleton structure of at least substantially rigid, thermally conducting elements,
   - providing a plurality of thermally conducting sheets/plates/layers, and thermally connecting a first plurality of the thermally conducting sheets/plates/layers to one or more of the rigid elements of the inner skeleton structure, and thermally connecting a second plurality of the thermally conducting sheets/plates/layers to one or more of the rigid elements of the outer skeleton structure, and
   - providing a thermally insulating material positioned between the first plurality of sheets/plates/layers and the second plurality of sheets/plates/layers.
22. A method according to embodiment 21, wherein the step of providing the skeleton structures comprises positioning the rigid elements in pairs of one element from the inner structure and one element from the outer structure, the positioning step comprises positioning the elements of each pair at least substantially parallel, the step of providing the sheets/plates/layers comprises providing the sheets/plates/layers as building elements each comprising a pair of one sheet/plate/layer of the first plurality and one sheet/plate/layer of the second plurality, and part of the thermally insulating material positioned there between.
23. A method according to any of embodiments 21 or 22, further comprising a first step of removing heat from and/or providing heat to the first and/or second sheets/layers/plates via the rigid elements.
24. A method according to embodiment 23, wherein the step of providing the skeleton structures comprises providing the skeleton structures having at least one rigid element comprising a channel extending in a longitudinal direction of the rigid element, and wherein the step of removing/providing heat comprises the step of providing a flow of a liquid, gas, and/or fluid through the channel in order to provide heat to or remove heat from the rigid element.
25. A method according to embodiment 24, wherein the step of providing the skeleton structures comprises providing the skeleton structures in which each of the rigid elements comprises a channel extending in a longitudinal direction of the rigid element, and wherein the first removing/providing step comprises the step of individually controlling a flow through each of the plurality of rigid elements.
26. A method according to any of embodiments 24 or 25, wherein the first removing/providing step comprises controlling, at an intersection between the one rigid element and the one or more other rigid elements, a flow from the rigid element to and/or from the one or more other rigid elements.
27. A method element according to any of embodiments 23-26, wherein the first removing/providing step comprises determining a temperature of or at one or more of the rigid elements and controlling a flow on the basis of the temperature(s) determined.
28. A method according to any of embodiments 23-27, further comprising a second step of providing heat to or removing heat from a first volume below the building.
29. A method according to embodiment 28, wherein the second step comprises providing a flow of a fluid/gas/liquid through the first volume in order to remove heat there from and/or provide heat thereto, and a step of controlling a flow between the flow providing means of the first and second removing/providing means.
30. A method according to any of embodiments 23-29, further comprising a third step of providing heat to or removing heat from a second volume, the second volume being external to the building, air temperatures external to the building influencing the temperature of the second volume.
31. A method according to embodiment 30, wherein the third step comprises providing a flow of a fluid/gas/liquid through the second volume in order to remove heat there from and/or provide heat thereto, and a step of controlling a flow between the flow providing means of the first and third removing/providing means.
32. A method according to any of embodiments 23-31, further comprising a fourth step of providing heat to or removing heat from a third volume, the third volume being external to the building, and air temperatures external to the building not influencing the temperature of the third volume to any substantial degree.
33. A method according to embodiment 32, wherein the fourth step comprises providing a flow of a fluid/gas/liquid through the third volume in order to remove heat there from and/or provide heat thereto, and a step of controlling a flow between the flow providing means of the first and fourth removing/providing means.
34. A method according to any of embodiments 23-33, further comprising a step of removing heat from or providing heat to the flow.

## Claims

1. A building element comprising:
- at least three, at least substantially parallel, thermally conducting sheets, plates, or layers, a first and a second of the thermally conducting sheets/ layers/plates being positioned on either side of a third of the thermally conducting sheets/layers/plates,
- a first thermally insulating layer, plate, or sheet, positioned between the first and the third thermally conducting sheets/layers/plates, and
- a second thermally insulating layer, plate, or sheet, positioned between the second and the third thermally conducting sheets/layers/plates
**CHARACTERIZED IN THAT** along a predetermined direction in a plane of the first sheet/layer/plate, the first and second sheets/layers/plates extend farther than the third conducting layer(s)/plate(s)/sheet(s).

2. A building element according to claim 1, further comprising openings in the first and second sheets/plates/layers.

3. A method of providing a building element, the method comprising:
- providing at least three, at least substantially parallel, thermally conducting sheets, plates, or layers, and positioning a first and a second of the thermally conducting sheets/layers/plates on either side of a third of the thermally conducting sheets/layers/plates,
- providing a first thermally insulating layer, plate, or sheet between the first and the third thermally conducting sheets/layers/plates, and
- providing a second thermally insulating layer, plate, or sheet between the second and the third thermally conducting sheets/layers/plates
**CHARACTERIZED IN THAT** the step of providing the at least three sheets/plates/layers comprises providing sheets/plates/layers so that, along a predetermined direction in a plane of the first sheet/layer/plate, the first and second sheets/layers/plates extend farther than the third conducting layer(s)/plate(s)/sheet(s).

4. A method according to claim 3, further comprising the step of providing openings in the first and second sheets/plates/layers.
